# EUROPÄISCHE PATENTANMELDUNG

(11) **EP 0 894 708 A2**
(43) Veröffentlichungstag der Anmeldung: **03.02.1999**
(21) Anmeldenummer: 98108435.3
(22) Anmeldetag: 08.05.1998
(51) Int. Cl.: B63H 1/20, F03B 3/12, F03B 1/02

(54) **Propeller- oder Turbinenrad und Verfahren zur Herstellung desselben**

(30) Priorität: 28.07.1997 DE 29713424 U; 02.04.1998 DE 19814886
(71) Anmelder: FÜRSTLICH HOHENZOLLERNSCHE WERKE LAUCHERTHAL GMBH & CO., D-72517 Sigmaringendorf-Laucherthal (DE)
(72) Erfinder: Picht, Richard, 72511 Bingen (DE)
(74) Vertreter: Schwabe - Sandmair - Marx

(57) **Zusammenfassung**

Bei einem Drehflügel für strömende oder fließfähige Medien, wie einem Propeller oder Turbinenrad, mit einer Nabe (1) und wenigstens einem lösbar mit der Nabe (1) verbundenen Flügel (11) werden die Nabe (1) und der Flügel (11) mittels einer Nut (2) und einer in die Nut (12) einschiebbaren Schiene (13) formschlüssig zusammengehalten. Die Nut (2) ist vorzugsweise in die Nabe (1) eingearbeitet, und die Schiene (13) ist vorzugsweise an der Flügelwurzel (14) vorgesehen.

## Beschreibung

Die Erfindung betrifft einen Drehflügel und ein Verfahren zu dessen Herstellung nach den Oberbegriffen der unabhängigen Ansprüche.

Drehflügel, wie sie beispielsweise bei Schiffen als Antriebspropeller zum Einsatz kommen, werden, falls sie als Festpropeller ausgeführt sind, regelmäßig einstückig gemäß Konstruktionszeichnungen nach Schablone mit Modellen, Teilmodellen-Hilfsmodellen in unterschiedlichen Formverfahren und unterschiedlichen Gußwerkstoffen gefertigt. Nach dem Gießen schließt sich ein sehr aufwendiges, kostenintensives Meß- und Schleifverfahren als weiterer Produktionsschritt an. Das Verschleifen von gußbedingt erforderlichen Bearbeitungszugaben erfolgt zum Teil maschinell und zum Teil in Handschleifarbeit. Gerade die händischen Schleifarbeiten werden umso aufwendiger, je mehr Flügel der Propeller aufweist, da die Zwischenräume zwischen den Propellerflügeln im Wurzelbereich der Propeller mit zunehmender Flügelzahl enger und schwieriger zugänglich werden. Ferner steigt auch das wirtschaftliche Risiko des Herstellers mit zunehmender Flügelzahl, da beim Abguß eines Festpropellers aus einem Guß jeder Flügel eine zusätzliche potentielle Fehlerquelle darstellt.

Trotz vieler Vorsichtsmaßnahmen und langjähriger Erfahrung der Propeller-Hersteller, sind Fehlfertigungen, insbesondere Fehlgüsse, und damit verbundene hohe finanzielle Einbußen nicht auszuschließen. Wegen des hohen Fertigungsaufwandes sind die mit dem Verlust eines Propellers verbundenen finanziellen Folgen besonders schmerzhaft. Dabei macht ein fehlgefertigter Flügel aus dem gesamten Propeller ein Ausschußteil. Diese Problematik stellt sich auch bei Drehflügeln aus anderen Materialien, beispielsweise Kunststoff.

Die Erfindung hat sich zur Aufgabe gemacht, die Herstellung von Drehflügeln zu vereinfachen und das Herstellungsrisiko zu mindern.

Diese Aufgabe wird durch die Gegenstände der unabhängigen Ansprüche gelöst.

Ein Drehflügel für strömende oder fließfähige Medien, wie ihn die Erfindung betrifft, weist eine Nabe und wenigstens einen lösbar mit der Nabe verbundenen Flügel auf. Bei Schiffspropellern bzw. -schrauben sowie bei Kaplanturbinen und Propellerpumpen, bevorzugten Ausführungsbeispielen der Erfindung, sind lösbar mit der Nabe verbundene Flügel bekannt. Die Verbindung wird bei Verstellpropellern durch eine Schraubverbindung gebildet. Schraubverbindungen sind zum einen fertigungstechnisch und auch im Hinblick auf den Zusammenbau von Nabe und Flügeln aufwendig. Bei Schiffspropellern sind sie darüberhinaus auch eine Quelle von Geräuschen und Kavitation. Abdeckungen zum Verdecken der Schraubverbindung bzw. des Schraubenkopfs erhöhen den Aufwand und schaffen darüberhinaus doch niemals eine vollkommen gleichmäßige Oberfläche.

Nach der Erfindung werden die Nabe und der wenigstens eine Flügel hingegen mittels einer Nut/Schiene-Verbindung zusammengehalten, bei der die Schiene in die Nut ein- und wieder aus der Nut herausschiebar und in radialer Richtung formschlüssig in der Nut fixiert ist. Der feste Formschluß besteht unmittelbar zumindest nach dem vollständigen Zusammenschieben von Nabe und Flügel. Vorzugsweise ist die Verbindung rein formschlüssig durch die aufeinander eng angepaßten Querschnitte von Nut und Schiene oder Schienenstücken.

Die Schiene ist in der Nut nicht nur radial fixiert, sondern vorteilhafterweise gleichzeitig auch seitlich fest geführt.

Obgleich die Schiene an der Nabe und die Nut am Flügel ausgebildet sein können, entspricht es einer bevorzugten Ausführungsform, die Nabe mit der Nut bzw. mit einer Mehrzahl von Nuten zu versehen und den Flügelfuß als Schiene auszubilden.

Die radiale Fixierung des Flügels wird dadurch erzielt, daß die Nut wenigstens eine Hinterschneidung an vorzugsweise wenigstens einer ihrer Seitenlängswände aufweist. Vorzugsweise sind zwei sich gegenüberliegende Seitenlängswände der Nut hinterschnitten. Die Hinterschneidung wird bevorzugterweise so ausgebildet, daß die hinterschnittene Nutwand eine einfache Schräge bildend die Nut in Richtung auf einen Nutgrund hin verbreitert. Die Schiene ist dann als sich entsprechend aufweitender Keil ausgebildet. Durch die Verbreiterung der Schiene und die Keilwirkung wird die Stabilität des Flügels insbesondere gegen Verkippen noch weiter verbessert.

Um Kerbkräfte so gering wie möglich zu halten, läuft die Hinterschneidung an ihrem Grund bevorzugterweise in einer Rundung aus.

Bei einfach schrägen Nutseitenwänden hat es sich bereits als völlig ausreichend herausgestellt, wenn ein Hinterschneidungswinkel von 5° gewählt wird. Vorzugsweise bildet die wenigstens eine hinterschnittene Nutseitenwand zur Radialen einen Winkel von wenigstens 3°, vorzugsweise wenigstens 5°, bis höchstens 60°, vorzugsweise höchstens 45°.

Besonders vorteilhaft ist es, wenn die Nut und die Schiene gleichzeitig auch als Verschiebe-Sicherung für den Flügel zusammenwirken. So wird eine Verschiebe-Sicherung gegen Verschieben des Flügels in Einschiebrichtung über eine Einbauposition des Flügels hinaus ohne zusätzliche Sicherungsmittel realisiert. In einer ersten Ausführungsform wirken eine in der Nut vorgesehene Vertiefung oder Erhebung und eine dementsprechend an der Schiene vorgesehene Erhebung oder Vertiefung als Anschlag zusammen. Die Ausbildung der Vertiefung in der Nut und der Erhebung an der Schiene ist fertigungstechnisch besonders einfach. Beispielsweise aus Stabilitätsgründen kann es jedoch auch vorteilhaft sein, die Erhebung in der Nut und die Vertiefung in der Schiene vorzusehen. Dies kann bei schlanken Naben von Vorteil sein. Vorzugsweise sind die Vertiefung und die damit zusammenwirkende Erhebung so angeordnet, daß sie nach dem Einschieben des Flügels von außen nicht mehr zu erkennen sind und deshalb keine zusätzlichen, die Strömung störenden Kanten bilden. Besonders bevorzugt ist die Verschiebe-Sicherung in dieser Ausführungsform im Bereich einer Trennebene zwischen einem Nutgrund und einer Grundfläche der Schiene vorgesehen.

In einer ebenfalls bevorzugten Ausführungsform wird eine Verschiebe-Sicherung dadurch ausgebildet, daß die Nut sich über ihre Länge allmählich in Einschiebrichtung des Flügels verjüngt. Dabei genügt bereits eine einseitige oder beidseitige Verjüngung von je 1°, bezogen auf parallele Nutseitenwände. Bei ebenen Nutseitenwänden beträgt der Winkel der Verjüngung, d.h. der Winkel zur Einschiebrichtung zwischen knapp 1° und höchstens 10°.

Beide Ausführungsformen für eine Verschiebe-Sicherung genügen bereits jeweils allein vollkommen zur Festlegung des Flügels in Einschiebrichtung, sie können jedoch auch mit Vorteil zusammen vorgesehen sein.

Die durch eine sich verjüngende Nut bereitgestellte Verschiebe-Sicherung kann zwischen den gleichen Nutseitenwänden gebildet werden, die mit der wenigstens einen Hinterschneidung versehen sind. Die Verjüngung in Nutlängsrichtung und die Hinterschneidung können jedoch auch durch unterschiedliche Nutseitenwandpaare gebildet werden, die sowohl in Nutlängsrichtung hintereinander als auch in Richtung der Radialen übereinander angeordnet sein können.

Zusätzlich zu dem hinterschnittenen Nutseitenwandpaar und gegebenenfalls auch noch zusätzlich zu dem sich verjüngenden Nutseitenwandpaar, falls diese Art der Verschiebe-Sicherung vorgesehen ist, kann die Schiene auch noch zwischen parallelen, radial aufragenden Nutseitenwänden eng geführt sein, um so die Stabilität des Flügels weiter zu erhöhen.

Eine zweite Verschiebe-Sicherung, die den in die Nut eingeschobenen Flügel gegen ein Verschieben entgegen der Einschiebrichtung sichert, wird vorzugsweise durch ein Sicherungsmittel gebildet, das an der Nabe so befestigt ist, daß es die Nut stirnseitig zumindest teilweise überdeckt. Vorzugsweise ist das Sicherungsmittel als Sicherungsring ausgebildet, der sämtliche Nuten gleichzeitig stirnseitig überdeckt; vorzugsweise schließt der Sicherungsring sich umfangsseitig bündig an die Nabe an. Besonders bevorzugt ist das Sicherungsmittel, insbesondere der Sicherungsring, an derjenigen Seite der Nabe angeordnet, die am leichtesten zugänglich ist. Im allgemeinen ist das die Nabenseite, die von dem Körper abgewandt ist, an dem eine Drehflügelwelle oder -achse befestigt ist. Wird der erfindungsgemäße Drehflügel beispielsweise durch einen Schiffspropeller gebildet, so kann ein Flügel durch einfaches Lösen des seeseitigen Sicherungsmittels zum Wechsel oder zur Reparatur von der Nabe abgezogen werden. Ein Abbau des Propellers ist nicht erforderlich. Dies ermöglicht eine schnelle Reparatur auch vor Ort und sogar unter Wasser.

Die Nabe wird vorzugsweise hochfest gegossen oder als Schmiedeprodukt gefertigt. Grundsätzlich kann sie jedoch in jeder für den jeweiligen Zweck geeigneten Weise gefertigt sein.

Nach einem bevorzugten Verfahren werden an einer Mantelfläche der Nabe Nuten eingearbeitet, insbesondere spanabhebend, beispielsweise gefräst, in einer Anzahl, die der Anzahl der zu montierenden Flügel entspricht, d.h. pro Flügel wird eine Nut vorgesehen. Die Nut kann auch wie ein Spindelgewindeabschnitt bzw. ein Trapezgewindeabschnitt an der Mantelfläche der Nabe verlaufen. Durch diesen Nutverlauf kann eine besonders lange Führung der Flügelschiene gebildet werden, was nicht zuletzt auch eine große Überdeckung der einzelnen Flügel zuläßt und ebenso bei schlanken langen Naben vorteilhaft sein kann.

Der bzw. die Flügel werden einzeln gefertigt. In einer ersten Ausführungsform wird er einstückig gegossen. Dadurch kann jeder Flügel bis auf sein Endmaß einzeln gefertig werden. Im Idealfall ist nach dem Aufschieben des Flügels kein weiterer Bearbeitungsschritt mehr erforderlich. Die Übergänge vom Flügelblatt zur Nabe im Wurzelbereich des Flügels verlaufen bereits ideal glatt. Gegebenenfalls erforderliche kleinere Oberflächenbearbeitungen sind jedoch auf jeden Fall wesentlich weniger aufwendig als bei bekannten einstückig hergestellten Drehflügeln.

Die Nabe oder der Flügel oder beide Teile sind vorzugsweise aus wenigstens einem der nachfolgenden Materialien hergestellt: Aluminium-Legierungen, Nickelbasiswerkstoffe, Grauguß, Sphäroguß oder Stahlguß, jeweils legiert oder unlegiert, Kupfer-Aluminium, Kupfer-Mangan, Kupfer-Nickel, Kupfer-Zink, Kupfer-Zinn oder Kupfer-Mehrstofflegierungen.

Der Drehflügel kann auch in Kunststoffbauweise gefertigt sein. Ebenso entspricht es einer bevorzugten Ausführungsform, nur den bzw. die Flügel in Kunststoffbauweise zu fertigen und mit einer Nabe aus einem metallischen Material, insbesondere einem der vorgenannten, zu kombinieren. Kunststoff-Drehflügel können als Drehflügel für Windkraftanlagen oder auch als Propeller für rennfähige Jachten Verwendung finden, um nur zwei Beispiele zu nennen. Besonders bevorzugt findet für den Flügel in dieser Bauweise ein Faserverbundwerkstoff, insbesondere ein Kohlefaser-Verbundwerkstoff Verwendung. Der Flügelfuß bzw. die Schiene wird aus einem geeigneten metallischen Werkstoff, insbesondere einem der oben genannten Werkstoffe zusammen mit einer Seele für das Flügelblatt vorzugsweise einstückig gefertigt, insbesondere gegossen. Die metallische Seele wird zur Bildung des Flügelblatts mit der Kunststoffaser umwickelt, wie dies beispielsweise bei Kunststoffaser-Rotorblättern für Hubschrauber geschieht.

Zur Verhinderung einer elektrochemischen Korrosion sind die Nabe und der bzw. die Flügel aus Materialien hergestellt, deren Potentialdifferenzen sich nur wenig, idealerweise gar nicht, unterscheiden; vorzugsweise sind sie aus dem gleichen Material gefertigt.

Die Nabe ist vorzugsweise rotationssymetrisch. In einer ersten Ausführungsform ist sie kreiszylindrisch. Es kann vor allem bei Drehflügeln zu Antriebszwecken auch vorteilhaft sein, die Nabe zum stromabwärtigen Ende hin verjüngt, insbesondere konisch verjüngt, auszubilden. In wieder einer anderen Ausführungsform ist die Nabe in Strömungsrichtung ballig.

Vorzugsweise ist die Materialdehnung des Flügels gleich oder größer als die der Nabe, so daß der Flügel im Falle von Beschädigungen wieder ausgebessert bzw. gerichtet werden kann. Auch solche Ausbesserungsarbeiten lassen sich aufgrund der Erfindung einfacher durchführen, da hierfür der Flügel von der Nabe abgenommen und als Einzelteil auf einer Richtbank eingespannt und repariert werden kann.

Das Bearbeiten bei zunächst gegossenem Einzelflügel erfolgt vorzugsweise hochgenau auf einem programmierten CNC-Bearbeitungszentrum mit hoher reproduzierbarer Genauigkeit von Blattgröße, Blattbreite und Blattdicke über das gesamte Flügelprofil einschließlich des hohlkehlenartigen Wurzelbereichs, wobei auch eine sich ändernde Steigung des Flügelprofils keine Probleme mehr bereitet. Durch die erfindungsgemäße Einzelteilfertigung vermindert sich auch der Aufwand für das Wuchten erheblich.

Erfindungsgemäße Drehflügel finden vorzugsweise als Antriebspropeller bzw. - schrauben für Wasserfahrzeuge, insbesondere auch U-Boote, Verwendung. Sie können mit Vorteil auch als Querschubpropeller ausgeführt sein. Ferner können Turbinenräder von energieerzeugenden Turbinen, insbesondere Kaplan- und Peltonturbinen, aber auch Förderräder, beispielsweise in Rauchgasentschwefelungsanlagen zum Fördern von Rauchgasen, als erfindungsgemäße Drehflügel ausgebildet sein. Ein weiteres bevorzugtes Einsatzfeld sind Drehflügel für Windkraftanlagen.

Ein erfindungsgemäßer Drehflügel eignet sich auch hervorragend für die Ersatzteilbewirtschaftung. Bei Wasserfahrzeugen, insbesondere bei kleinen Schiffseinheiten, wo die Ersatzteillagerung stets ein Platzproblem darstellt, fällt die Platzeinsparung besonders ins Gewicht. Es muß kein schwerer und sperriger Festpropeller mehr gelagert werden, es genügt vielmehr die Bevorratung einzelner Flügel und gegebenenfalls einer Ersatznabe, die jedoch jeweils für sich vergleichsweise wenig Platz beanspruchen. Der erfindungsgemäße Drehflügel bietet sich auch besonders zum Einsatz als U-Boot-Propeller an, da der Transport der Nabe und der einzelnen Flügel durch das enge Einstiegsluk des Boots keine Probleme mehr bereiten dürfte. Ganz grundsätzlich kann durch die Erfindung der Kostenaufwand für die Ersatzteilbewirtschaftung von Drehflügeln, insbesondere Antriebspropellern, Kaplanturbinen und Pumpen, erheblich reduziert werden, was zusätzlich zur Risikominderung bei der Herstellung, was ebenfalls auf die Kosten durchschlägt, zur mehrfachen Kostenreduzierung führt.

Die Erfindung wird nachfolgend anhand eines Schiffspropellers als ein bevorzugtes Ausführungsbeispiel für einen erfindungsgemäßen Drehflügel erläutert. Die am Beispiel eines Schiffspropellers beschriebenen Merkmale sind jedoch auf weitere bevorzugte Verwendungen der Erfindung unmittelbar übertragbar. Es zeigen:
- Fig. 1: ein erstes Ausführungsbeispiel eines Drehflügels
- Fig. 2: eine Nabe des Drehflügels nach Fig. 1

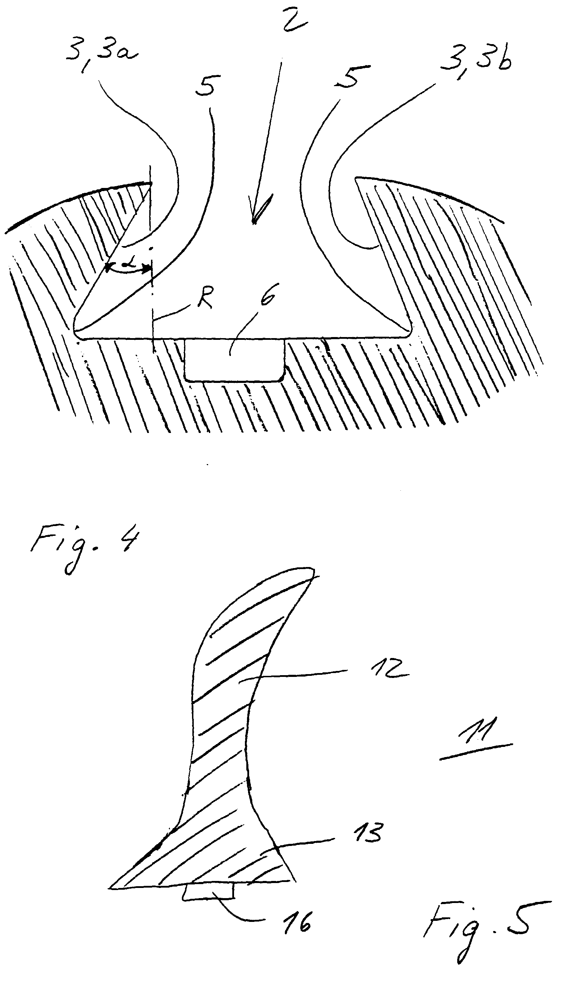

- Fig. 3: einen einzelnen Flügel des Drehflügels nach Fig. 1
- Fig. 4: einen Teil eines Querschnitts der Nabe nach Fig. 2
- Fig. 5: den Flügel nach Figur 3 in einem Längsschnitt,
- Fig. 6: ein zweites Ausführungsbeispiel eines Drehflügels in einer Perspektive,
- Fig. 7: eine Ansicht des Drehflügels nach Fig. 6,
- Fig. 8: den Schnitt A-A nach Fig. 6 und
- Fig. 9: eine in Einschieberichtung konische Nabennut des Drehflügels nach den Figuren 6-8.

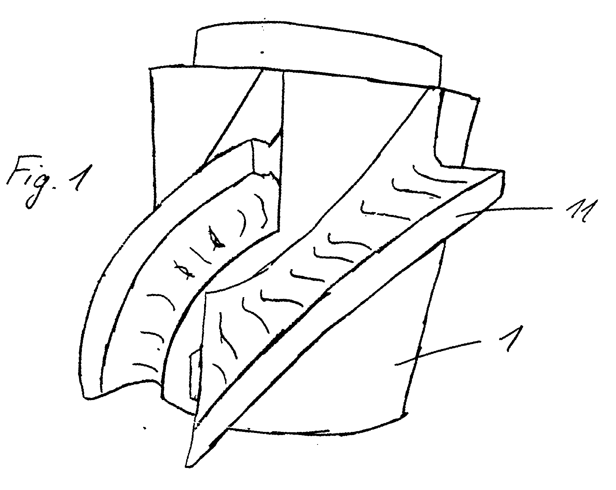

Fig. 1 zeigt einen Schiffspropeller mit einer Nabe 1 und mehreren über deren Umfang gleichmäßig verteilt angeordneten Flügeln 11. Im Gegensatz zu herkömmlichen Festpropellern wurden die Nabe 1 und die Flügel 11 jedoch jeweils einzeln hergestellt und dann erst zum Propeller zusammengefügt. Die Nabe 1 und die Flügel 11 sind je aus CuAl oder CuMn in Spezialgießverfahren hergestellt. Die Nabe 1 ist im Querschnitt kreiszylindrisch und verjüngt sich konisch in Strömungsrichtung.

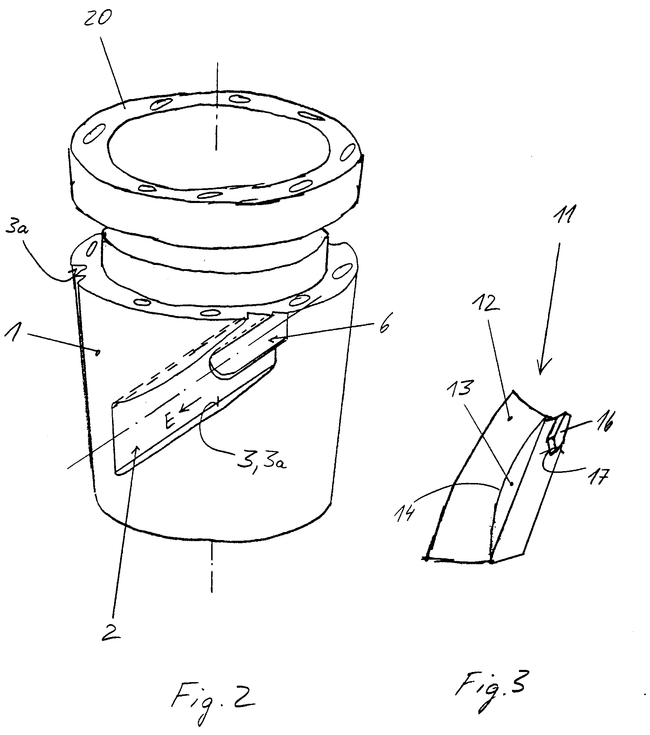

Das Zusammenfügen von Nabe 1 und Flügeln 11 erfolgt, wie aus dem Vergleich von Fig. 1 und Fig. 2 zu erkennen ist, durch Einschieben jedes der Flügel 11 in je eine Aufnahme- und Haltenut 2 an einer Mantelfläche der Nabe 1. Über den Umfang der Mantelfläche der Nabe 1 ist eine der Anzahl der Flügel 11 entsprechende Anzahl von Nuten 2 gleichmäßig verteilt angeordnet.

Jeder der Flügel 11 weist eine Befestigungsschiene 13 auf, die zum Befestigen des Flügels 11 in die Nuten 2 einschiebbar ist. Im Ausführungsbeispiel weist jede der Nuten 2 eine gerade, in Einschiebrichtung E weisende Mittellängsachse auf. Die Flügel 11 können somit mit ihren jeweiligen Schienen 13 einfach gerade in jede der Nuten 2 hineingeschoben werden. Die Nuten 2 können jedoch beispielsweise auch als Abschnitte eines Trapezgewindes, d.h. in der Art eines Spindelgewindes, verlaufen. Solch ein Verlauf läßt eine längere Führung einer entsprechend geformten Schiene 13 zu und eignet sich besonders bei großer Überdeckung der Flügel 11 und/oder schlanken Naben.

Die Schiene 13 des Flügels 11 erstreckt sich über die gesamte Länge der Flügelwurzel 14. Sie verlängert das Flügelblatt 12 damit über die Wurzel 14 hinaus in radialer Richtung, bezogen auf den eingebauten Zustand des Flügels 11. Die Nut 2 an der Nabe 1 verläuft der Steigung des Flügelblatts 12 an der Wurzel 14 folgend, d.h. die Nut 2 weist gegenüber der Längsachse der Nabe 1 die gleiche Steigung auf wie der Flügel 11 in seinem Wurzelbereich.

Wie am besten im Querschnitt nach Fig. 4 zu erkennen ist, weist jede der Nuten 2 wenigstens eine hinterschnittene Seitenwand 3 auf. Im Ausführungsbeispiel sind jeweils zwei sich gegenüberliegende Seitenwände 3 hinterschnitten. In die derart durch die Seitenwände 3 gebildeten Hinterschneidungen 3a und 3b greift die Schiene 13 des in die Nut 2 eingeschobenen Flügels 11 mit ihren an die Hinterschneidungen 3a und 3b angepaßt sich verbreiternden Seitenbereichen ein. Die Schiene 13 sitzt spielfrei in der Nut 2. Der Flügel 11 wird mittels seiner Schiene 13 durch die derart gebildete Verkeilung in der Nut 2 gehalten, d.h. er wird durch die Verkeilung, im Ausführungsbeispiel eine Schwalbenschwanz-Verbindung, bezüglich der Radialen R stramm fixiert.

Gegenüber der Radialen R verlaufen die hinterschnittenen Seitenwände 3 gerade schräg unter einem Winkel α, der im Ausführungsbeispiel 5° beträgt. Solch ein vorteilhafterweise geringer Hinterschneidungswinkel α hat sich überraschenderweise als vollkommen ausreichend für die Verkeilung und radiale Fixierung erwiesen.

Zum Verhindern, zumindest Minimieren, von Kerbwirkung läuft jede der hinterschnittenen Seitenwände 3 in einer Rundung 5 aus.

Zur Festlegung des Flügels 11 in einer Endposition bezüglich der Einschiebrichtung E ist in der Nut 2 eine Vertiefung 6 ausgenommen, in der in der Endposition des Flügels 11 ein erhabener Block 16 an einer Unterseite der Schiene 13 mit einer bezüglich der Einschubrichtung E vorderen Anschlagfläche 17 an einer Gegenfläche der Vertiefung 6 auf Anschlag liegt. Die Vertiefung 6 ist als einfach gerade Sacknut an einem Grund der Nut 2 in deren bezüglich der Einschiebrichtung E rückwärtigen Bereich ausgenommen. Zum Einführen des Blocks 16 ist die Vertiefung 6 stirnseitig offen. Im zusammengebauten Zustand ist der Block 16 vollkommen in der Vertiefung 6 aufgenommen und schließt an seinem hinteren Ende mit einer Stirnfläche der Nabe 1 bündig und plan ab. Dem Grunde nach könnte ein erhabener Block auch in der Nut 2 an der Stelle der Vertiefung 6 vorgesehen sein, während in dieser Ausführungsform eine entsprechende Vertiefung flügelseitig vorzusehen wäre.

Ein Verschieben des Flügels 11 aus der Endposition entgegen der Einschiebrichtung E wird durch einen Sicherungsring 20 verhindert, der an diejenige Stirnfläche der Nabe 1 angesetzt und an der Nabe 1 geeignet befestigt wird, über die der Flügel 11 in seine Nut 2 eingeschoben worden ist. Der Sicherungsring 20 wird im Ausführungsbeispiel am Anströmende der Nabe 1 angesetzt und angeschraubt.

Sicherungsring 20 und Nabe 1 weisen idealerweise die gleiche elektrochemische Potentialdifferenz auf; vorzugsweise sind sie aus dem gleichen Material gefertigt. Falls der Sicherungsring 20 am Abströmende der Nabe 1 befestigt ist, kann er noch von einer Abströmkappe umgeben sein. Durch die seeseitige Befestigung des Sicherungsrings 20 ist ein Wechsel einzelner Flügel 11 ohne Propellerabbau möglich. Umrüstzeiten werden hierdurch erheblich verkürzt. Auch Behelfsreparaturen vor Ort, gegebenenfalls sogar unter Wasser, werden begünstigt oder überhaupt erst ermöglicht.

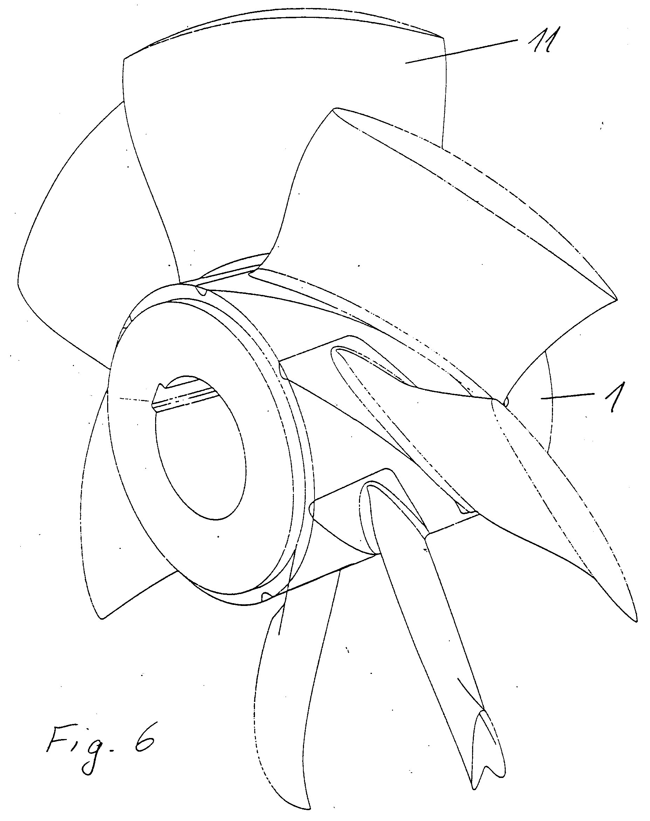

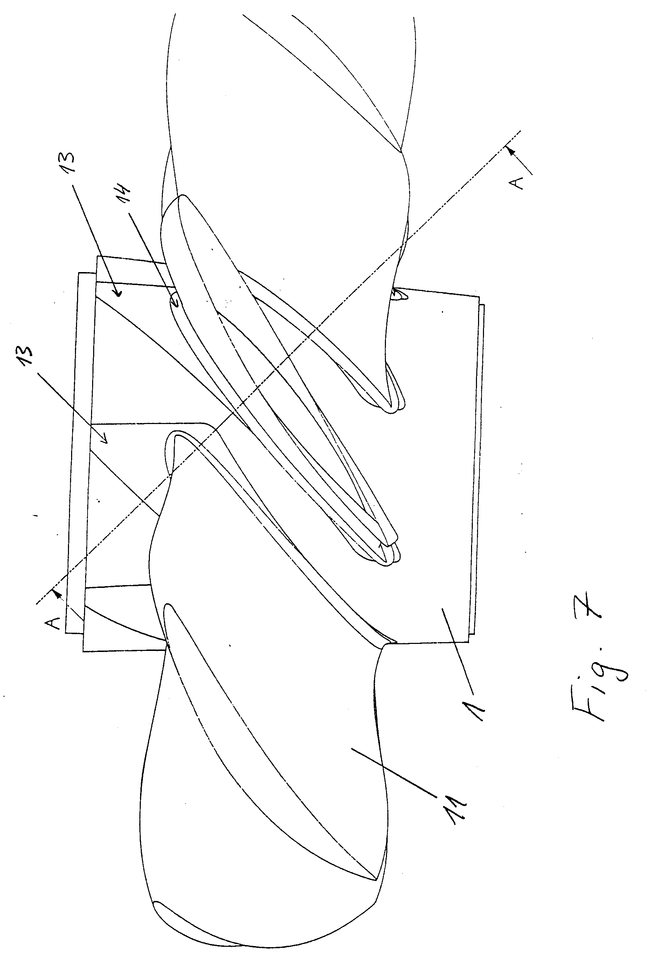

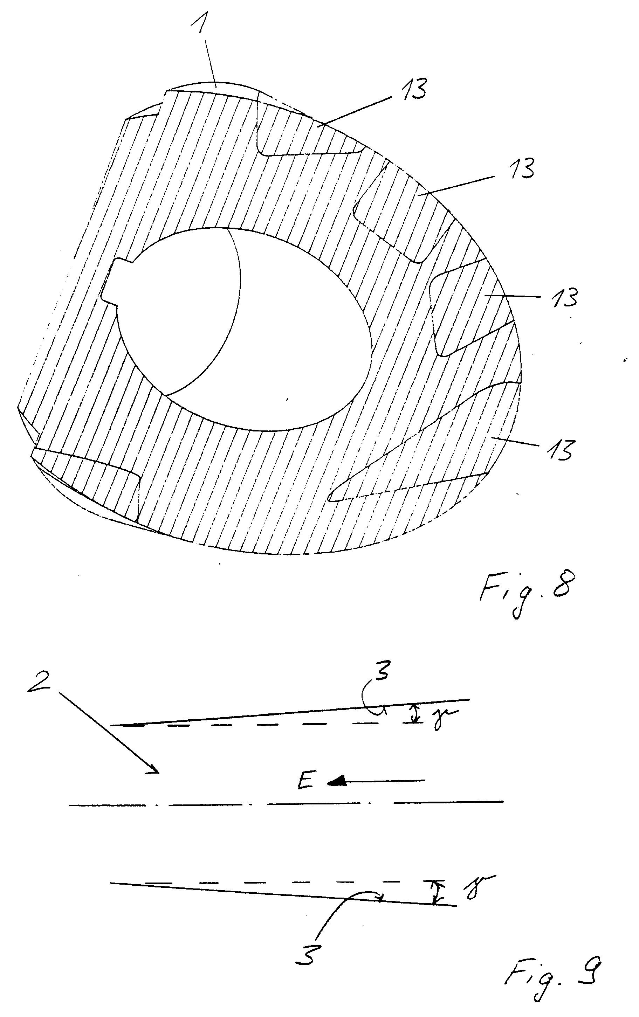

Die Fixierung in Einschiebrichtung E, d.h. das Blockieren gegen ein Weiterschieben in Einschiebrichtung, wird in einer alternativen Ausführungsform, die in den Figuren 6 bis 9 dargestellt ist, durch verjüngt aufeinander zu laufende, d.h. bogenförmig oder konisch gerade aufeinander zu laufende, Seitenwände 3 gebildet. In dieser alternativen Ausführungsform können die Seitenwände 3 den Flügel 11 derart halten und fixieren, daß er aus der Einbauposition in der Nut lediglich entgegen der Einschiebrichtung E wieder zurückgeschoben werden kann. Bei konischer Verjüngung der Nut 2 hat es sich als ausreichend erwiesen, eine der Seitenwände 3, vorzugsweise beide Seitenwände 3, unter einem Winkel von 1° gegenüber der Mittellängsachse der Nut in Einschiebrichtung E aufeinander zulaufend auszubilden. Bevorzugt beträgt der Verjüngungswinkel γ 0,5° bis 10°, besonders bevorzugt weniger als 5°.

Die Ausbildung der Verschiebe-Sicherung in der Nut 2 bzw. durch die Nut 2, hat den Vorteil, daß durch die Verschiebe-Sicherung an der in der Strömung liegenden Oberfläche des Propellers keine zusätzlichen störenden Strukturen gebildet werden, die möglicherweise durch einen weiteren Schritt der Endbearbeitung so weit als möglich beseitigt werden müßten.

Zur Herstellung des Drehflügels wird die Drehflügelnabe 1 hochfest gegossen oder geschmiedet, und an einer Mantelfläche der Nabe 1 wird eine der Anzahl der Flügel 11 entsprechende Anzahl der Aufnahmenuten 2 herausgearbeitet oder bereits beim Gießen oder Schmieden vorgesehen. Die Flügel 11 werden getrennt von der Nabe 1 eigenständig gefertigt. Die Aufnahmenut 2 und die Schiene 13 werden aufeinander abgestimmt geformt, derart, daß die Schiene 13 in Längsrichtung in die Nut 2 einschiebbar und wieder herausschiebbar ist und in der Nut 2 in Verschieberichtung geführt wird, aber bezüglich anderen Richtungen, insbesondere in radialer Richtung, fixiert ist. Die Fixierung erfolgt vorzugsweise durch die beschriebene Schwalbenschwanz-Führung.

Aufgrund der Fixierung des bzw. der Flügel 11 in der Aufnahmenut 2 selbst genügt für die endgültige Festlegung der von außen anzubringende Sicherungsring 20.

## Patentansprüche

1. Drehflügel für strömende oder fließfähige Medien mit
a) einer Nabe (1) und
b) wenigstens einem lösbar mit der Nabe (1) verbundenen Flügel (11),
**dadurch gekennzeichnet, daß**
c) die Nabe (1) und der Flügel (11) mittels einer Nut (2) und einer in die Nut einschiebbaren Schiene (13) formschlüssig zusammengehalten werden.

2. Drehflügel nach Anspruch 1, dadurch gekennzeichnet, daß die Nut (2) wengistens eine Hinterschneidung (3a, 3b) aufweist, die von der Schiene (13) hintergriffen wird.

3. Drehflügel nach Anspruch 1 oder 2, dadurch gekennzeichnet, daß die Hinterschneidung (3a, 3b) an ihrem Grund in einer Rundung (5) ausläuft.

4. Drehflügel nach wenigstens einem der vorhergehenden Ansprüche, dadurch gekennzeichnet, daß in der Nut (2) eine Verschiebe-Sicherung ausgebildet ist, an die die Schiene (13) zur Befestigung des Flügels (11) beim Einschieben bis auf Anlage geschoben wird.

5. Drehflügel nach dem vorhergehenden Anspruch, dadurch gekennzeichnet, daß die Verschiebe-Sicherung durch eine in der Nut (2) ausgebildete Vertiefung (6) oder Erhebung und eine dagegen schiebbare Anlagefläche (17) der Schiene (13) gebildet wird.

6. Drehflügel nach dem vorhergehenden Anspruch, dadurch gekennzeichnet, daß die Anlagefläche (17) der Schiene (13) in einem in Bezug auf die Einschiebrichtung rückwärtigen Bereich der Schiene (13) ausgebildet ist.

7. Drehflügel nach einem der Ansprüche 4 bis 6, dadurch gekennzeichnet, daß die Verschiebe-Sicherung oder eine weitere Verschiebe-Sicherung durch verjüngt, vorzugsweise konisch aufeinander zu laufende Seitenwände (3) der Nut (2) gebildet wird.

8. Drehflügel nach dem vorhergehenden Anspruch, dadurch gekennzeichnet, daß die wenigstens eine Hinterschneidung (3a, 3b) und die Verschiebe-Sicherung durch die gleiche Nutseitenwand (3) gebildet werden.

9. Drehflügel nach wenigstens einem der vorhergehenden Ansprüche, dadurch gekennzeichnet, daß die Schiene (13) zwischen parallelen Seitenwänden (3) der Nut (2) eng geführt ist.

10. Drehflügel nach wenigstens einem der vorhergehenden Ansprüche, dadurch gekennzeichnet, daß der Flügel (11) gegen ein Verschieben entgegen der Einschiebrichtung der Schiene (13) durch ein stirnseitig an der Nabe (1) anliegendes und an der Nabe (1) befestigtes Sicherungsmittel, insbesondere ein Sicherungsring (20), gesichert wird.

11. Drehflügel nach wenigstens einem der vorhergehenden Ansprüche, dadurch gekennzeichnet, daß der Flügel (11) aus wenigstens einem der folgenden Materialien gefertigt ist:
Al - Legierungen,
Nickelbasiswerkstoffe, Grauguß, Sphäroguß oder Stahlguß, jeweils legiert oder unlegiert,
Kupfer - Aluminium, Kupfer - Mangan, Kupfer - Nickel, Kupfer - Zink, Kupfer-Zinn,
Kupfer - Mehrstofflegierungen oder
Kunststoff, insbesondere Kunststoffaser mit metallischern Kern.

12. Drehflügel nach wenigstens einem der vorhergehenden Ansprüche, dadurch gekennzeichnet, daß die Nabe (1) aus wenigstens einem der folgenden Materialien gefertigt ist:
Al - Legierungen,
Nickelbasiswerkstoffe, Grauguß, Sphäroguß oder Stahlguß, jeweils legiert oder unlegiert,
Kupfer - Aluminium, Kupfer -, Mangan, Kupfer - Nickel, Kupfer - Zink,
Kupfer-Zinn oder
Kupfer - Mehrstofflegierungen.

13. Drehflügelrad nach wenigstens einem der vorhergehenden Ansprüche, dadurch gekennzeichnet, daß die Nabe (1) hochfest gegossen oder geschmiedet ist.

14. Drehflügel nach wenigstens einem der vorhergehenden Ansprüche, dadurch gekennzeichnet, daß die Nabe (1) und der Flügel (11) aus Materialien gleicher Potentialdifferenz gefertig sind; vorzugsweise sind sie aus dem gleichen Material gefertigt.

15. Drehflügel nach wenigstens einem der vorhergehenden Ansprüche, dadurch gekennzeichnet, daß die Materialdehnung des Flügels (11) gleich oder größer als die der Nabe (1) ist.

16. Drehflügel nach wenigstens einem der vorhergehenden Ansprüche, dadurch gekennzeichnet, daß die Nabe (1) in Strömungsrichtung zylindrisch verjüngt, kreiszylindrisch oder ballig ist.

17. Propeller für ein Wasserfahrzeug, dadurch gekennzeichnet, daß der Propeller nach einem der vorhergehenden Ansprüche ausgebildet ist.

18. Förderrad für ein gasförmiges, flüssiges oder granulatartiges Medium, bespielsweise zum Fördern von zu entschwefelndem Rauchgas, dadurch gekennzeichnet, daß das Förderrad nach wenigsten einem der Ansprüche 1 bis 16 ausgebildet ist.

19. Turbinenrad, insbesondere für eine Kaplanturbine, Peltonturbine oder Propellerpumpe, dadurch gekennzeichnet, daß das Turbinen oder Pumpenrad nach wenigstens einem der Ansprüche 1 bis 16 ausgebildet ist.

20. Verfahren zur Herstellung eines Drehflügels, bei dem
a) eine Drehflügelnabe (1) geformt, insbesondere gegossen oder geschmiedet, und
b) an einer Mantelfläche der Nabe (1) wenigstens eine Nut (2) herausgearbeitet oder bereits beim Formen vorgesehen wird,
c) ein Flügel (11) getrennt von der Nabe (1) eigenständig gefertigt wird, der ein Flügelblatt (12) und eine das Blatt (12) über dessen Wurzel hinaus verlängernde Schiene (13) aufweist, die beim Zusammenfügen von Nabe (1) und Flügel (11) in die Nut (2) in eine Endposition hineingeschoben und in der Endposition festgelegt wird,
d) wobei die Nut (2) und die Schiene (13) aufeinander abgestimmt geformt werden, derart, daß die Schiene (13) in Längsrichtung in die Nut (2) einschiebbar und wieder aus der Nut (2) herausschiebbar und in der Nut (2) in Verschieberichtung geführt, jedoch bezüglich der Radialen festgelegt ist.

21. Verfahren zur Herstellung eines Drehflügels, nach dem vorhergehenden Anspruch, dadurch gekennzeichnet, daß der Flügel einstückig gegossen wird.

22. Verfahren zur Herstellung eines Drehflügels, nach Anspruch 20, dadurch gekennzeichnet, daß der Flügel (11) in Kunststoffbauweise mit oder ohne metallischen Kern gefertigt wird.

23. Verfahren zur Herstellung eines Drehflügels nach dem vorhergehenden Anspruch, dadurch gekennzeichnet, daß die Schiene (13) und eine daran angeformte Seele aus einem metallischen Werkstoff gefertigt, insbesondere einstückig gegossen werden und die Seele mit Kunststoffaser umwickelt wird.
